# EUROPEAN PATENT SPECIFICATION

(11) **EP 1 783 435 B1**
(45) Date of publication and mention of the grant of the patent: **05.11.2008**
(21) Application number: 06123111.4
(22) Date of filing: 27.10.2006
(51) Int. Cl.: F24C 15/34

(54) **Heat storage range cookers**
Kochvorrichtungen mit Wärmespeicherung
Appareils de cuisson à accumulation de chaleur

(30) Priority: 03.11.2005 GB 0522419
(43) Date of publication of application: 09.05.2007
(73) Proprietor: Lincat Group plc, Whisby Road LN6 3QZ Lincolnshire Lincoln (GB)
(72) Inventor: FRANCIS, Mark, Nottingham, Middlesex NG2 7GX (GB); FISHER, David, Twickenham, Middlesex TW1 4PU (GB)
(74) Representative: Parry, Christopher Stephen

(56) References cited:
- GB-A- 191 122 001
- JP-A- 60 066 029
- US-A- 1 550 340
- US-A- 5 542 194

## Description

The invention relates to heat-storage type domestic cookers.

Domestic cookers fall into two main categories. In the first, most common category, the oven compartment is made from pressed steel and an exposed element (gas or electrically powered) located within the walls of the oven compartment with or without further concealed elements, heats food put into the compartment. Fans are often provided in such ovens for speed and evenness of cooking. These ovens are turned off when not in use and take a short time (about 10 minutes) to warm up when they are required for cooking. They have a low thermal mass.

The second category of domestic cookers comprises the heat-storage type of cooker typified by the well known Aga (RTM). In this type, the or each oven compartment is slowly heated over a long period (6 hours or so) from a heat source (oil, gas, electric) located centrally within the cooker outside the walls of the or each oven compartment. The walls of the oven compartment are formed from cast iron usually about 5 - 6mm thick. This is not only heavy but has a high thermal mass. These ovens are not turned off between uses but run continuously so that they are always ready for immediate use. In cooking, heat stored in the cast iron walls is transferred into the food. These ovens run at a constant temperature which is maintained by thermostatic control of the heat source.

Heat-storage cookers do not have any powered heating elements within the walls of the oven compartment. Rather, they operate by radiation of heat stored in the oven compartment walls which has been received from heating elements located outside those walls. Cookers of this type cook quite differently to cookers in which a heating element is located within the oven compartment. Typically, food cooked in this way retains much more moisture.

The present invention provides an improved heat-storage cooker by replacing the cast iron walls with walls of a ceramic material formed from silicon carbide, whose properties are discussed in US-5 542 194.

This has a number of advantages. Although ceramic materials are generally less dense than cast iron they have a higher specific heat. Thus an oven compartment wall mainly comprising silicon carbide having a nominal thickness of about 30mm will be no heavier than a conventional cast iron wall and will provide a very good thermal mass which also has extremely good heat conducting properties, essential for spreading heat from the heat source. Further, silicon carbide provides a smooth, very hard, non-scratch surface with extremely good cleaning properties. Silicon carbide forms an attractive pale grey/blue coloured surface which can be wiped clean with a damp cloth without staining.

Embodiments of the invention are described below with reference to the accompanying drawings, in which:
Figure 1 is a perspective view of a domestic cooker;
Figure 2 is a perspective view of the cooker of Figure 1 with two doors removed to reveal two oven compartments;
Figure 3 is a perspective view of an oven compartment shown removed from the cooker; and
Figure 4 is another perspective view of the oven compartment of Figure 3, showing a heating element.

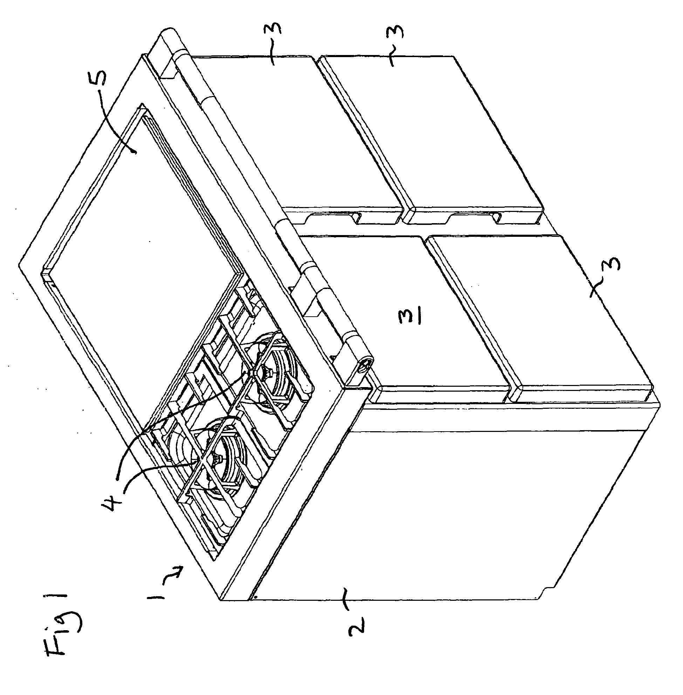

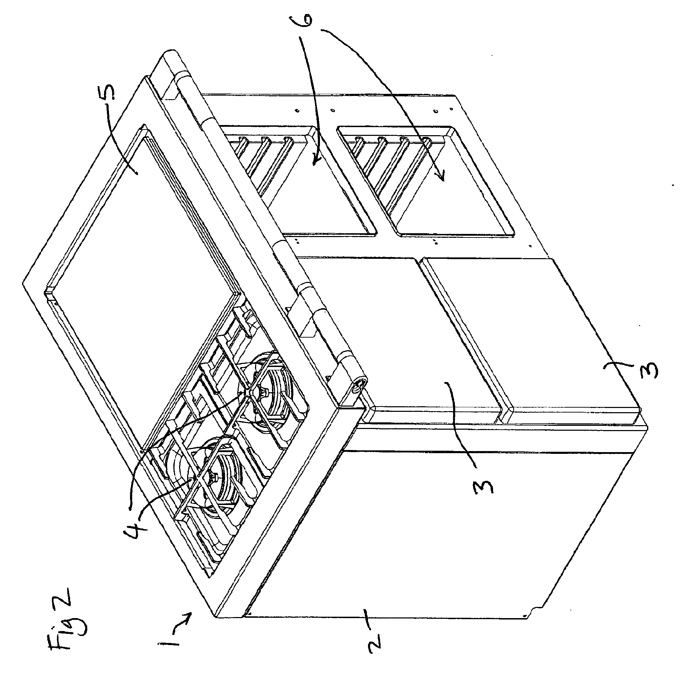

The heat storage cooker 1, shown in Figure 1 and Figure 2 comprises a frame 2 supporting four heated compartments closed by hinged doors 3, two gas rings 4 and an electric hot-plate 5. The right hand side of the cooker has two oven compartments 6 mounted one above the other as seen in Figure 2.

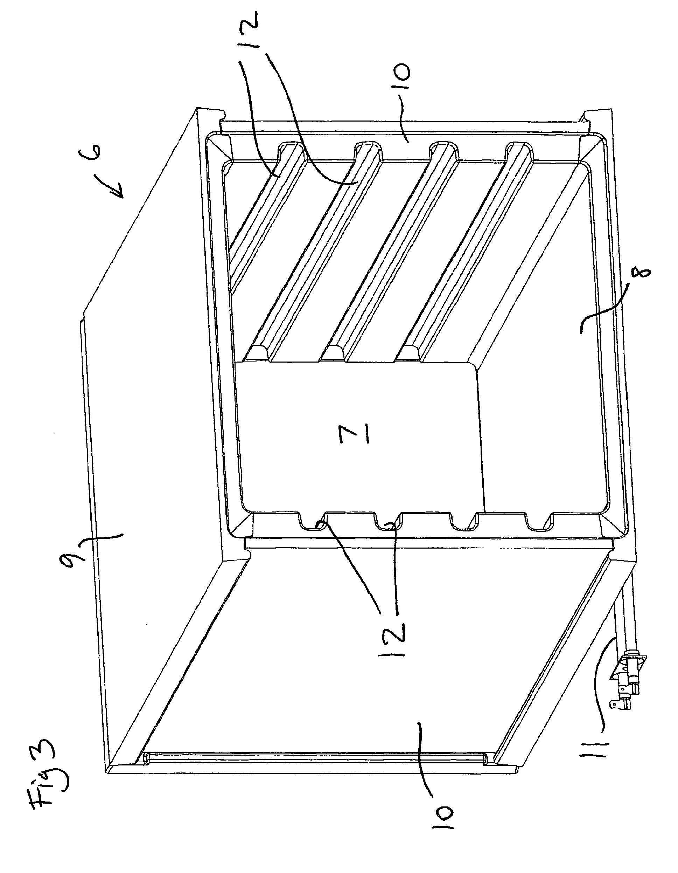

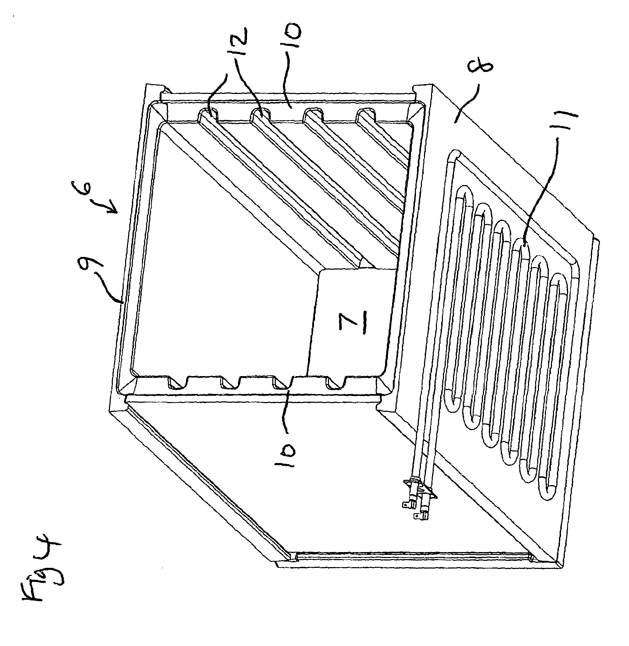

As shown best in Figures 3 and 4, the compartments 6 comprise a rear wall 7, a bottom wall 8, a top wall 9 and opposite side walls 10 fitted together to form a cooking space having an open front face opposite the rear wall 7. In use the front face is closed by a hinge mounted door 3. An electric heating element 11 having a length of about 5 metres is mounted on the frame 2 outside and beneath each of the oven compartments 6. The element 11 is relatively low-powered (about 900W).

The walls 7 to 10 of the oven compartment comprise silicon carbide (SiC). In a preferred embodiment, the material of the wall consists of silicon carbide combined with fillers and binders as required. The silicon carbide will comprise at least 50% of the mixture and in a preferred example, comprises about 80% of the mixture.

Each wall is formed by a rectangular plate. The bottom and top walls 8, 9 are identical to each other as are the side walls 10. Further, the walls are all symmetrical about both their major axes so that their front edges are identical to their rear edges and their side edges are identical to each other. This assists in manufacture in that only three different plates need to be made and in assembly. The plates interlock at their adjacent edges and are additionally held together by adhesive, this makes the compartment air-tight when the door is closed. The walls are moulded from ceramic material such as by pressing powdered silicon carbide into a mould to form a self supporting structure which is subsequently fired over several days to form a strong, hard wall.

A plurality of parallel grooves 12 are formed in the inner faces of the side walls for supporting oven shelves or cooking vessels directly. Since the grooves are formed in the moulding process, no additional fittings are required. The grooves slightly reduce the mass of the side walls but this is compensated for by them being slightly thicker overall than the other walls.

In operation, the element 11 heats the oven compartment walls over a long period (about 6 to 8 hours) to a desired temperature. Heat from the element is spread evenly around the compartment walls and stored for cooking. Once the desired temperature is reached it is maintained by thermostatic control of the element.

In the cooker shown, the two oven compartments 6 are provided with heating elements. Two warming compartments are mounted one above the other next to the oven compartments and receive heat by conduction through the cooker from the oven compartments. The two gas rings 4 on the top of the cooker are powered and controlled separately from the oven compartments as is the hot plate 5.

## Claims

1. A heat-storage domestic cooker (1) having an oven compartment (6) comprising a rear wall (7), a bottom wall (8), a top wall (9) and opposite side walls (10) fitted together to form a cooking space, and means (11) for heating the oven compartment mounted outside the walls of the oven compartment, wherein the walls of the oven compartment (7, 8, 9, 10) are made from ceramic material comprising silicon carbide.

2. A cooker as claimed in Claim 1, wherein the silicon carbide comprises about 80% of the ceramic material.

3. A cooker as claimed in any preceding claim, wherein each of the walls (7, 8, 9, 10) is formed by a rectangular plate and wherein the bottom and top walls are identical to each other and the opposite side walls are identical to each other.

4. A cooker as claimed in Claim 3, wherein each of the walls (7, 8 , 9, 10) is symmetrical about both of its major axes.

5. A cooker as claimed in any preceding claim, wherein the inner faces of the side walls (10) are formed with a plurality of parallel grooves (12) for supporting shelves and/or cooking vessels.

6. A cooker as claimed in any preceding claim, wherein each of the walls (7, 8, 9, 10) is moulded.

7. A cooker as claimed in any preceding claim, wherein the walls (7, 8, 9, 10) of the compartment (6) interlock along their adjacent edges and are additionally held together by adhesive.

8. A cooker as claimed in any preceding claim, further comprising a frame (2) and a hinge-mounted door (3) supported on the frame to close the open face of the compartment (6) opposite the rear wall (7) and an electric heating element (11) mounted underneath the oven compartment.

9. A cooker as claimed in Claim 8, in which two oven compartments (6) are mounted one above the other, two warming compartments are mounted one above the other next to the oven compartments, and separately powered cooking means (4, 5) are mounted on the top of the cooker.

## Patentansprüche

1. Haushaltsherd (1) mit Wärmespeicherung, der ein Ofenfach (6) aufweist, das eine Rückwand (7), eine untere Wand (8), eine obere Wand (9) und gegenüberliegende Seitenwände (10), die zusammengebaut sind, um einen Backraum zu bilden und Mittel (11) zum Erwärmen des Ofenfachs umfasst, die außerhalb der Wände des Ofenfachs montiert sind, wobei die Wände des Ofenfachs (7, 8, 9, 10) aus Keramikmaterial hergestellt sind, das Siliciumcarbid umfasst.

2. Herd nach Anspruch 1, wobei das Siliciumcarbid ca. 80% des Keramikmaterials umfasst.

3. Herd nach einem vorhergehenden Anspruch, wobei jede Wand der Wände (7, 8, 9, 10) aus einer rechteckigen Platte gebildet ist und wobei die unteren und oberen Wände miteinander identisch sind und die gegenüberliegenden Wände miteinander identisch sind.

4. Herd nach Anspruch 3, wobei jede Wand der Wände (7, 8, 9, 10) um beide ihrer Hauptachsen symmetrisch ist.

5. Herd nach einem vorhergehenden Anspruch, wobei die Innenflächen der Seitenwände (10) mit einer Mehrheit paralleler Nuten (12) zum Tragen von Rosten und/oder Kochgefäßen gebildet sind.

6. Herd nach einem vorhergehenden Anspruch, wobei jede Wand der Wände (7, 8, 9, 10) geformt ist.

7. Herd nach einem vorhergehenden Anspruch, wobei sich die Wände (7, 8, 9, 10) des Fachs (6) entlang ihrer benachbarten Kanten verriegeln und außerdem durch Kleber zusammengehalten werden.

8. Herd nach einem vorhergehenden Anspruch, der weiter einen Rahmen (2) und eine scharnierartig befestigte Tür (3), die am Rahmen nahe der offenen Stirnseite des Fachs (6) gegenüber der Rückwand (7) montiert ist und ein elektrisches Heizelement (11) umfasst, das unterhalb des Ofenfachs montiert ist.

9. Herd nach Anspruch 8, bei dem zwei Ofenfächer (6) übereinander montiert sind, zwei Wärmefächer übereinander neben den Ofenfächern montiert sind und separat betriebene Kochmittel (4, 5) oben auf dem Herd montiert sind.

## Revendications

1. Cuisinière domestique à stockage thermique (1) ayant un compartiment four (6) comportant une paroi arrière (7), une paroi inférieure (8), une paroi supérieure (9) et des parois latérales opposées (10) montées ensemble de façon à former un espace de cuisson, et un moyen (11) pour chauffer le compartiment du four monté à l'extérieur des parois du compartiment du four, dans laquelle les parois du four (7, 8, 9, 10) sont faites en céramique comprenant du carbure de silicium.

2. Cuisinière selon la revendication 1, dans laquelle le carbure de silicium constitue environ 80 % de la céramique.

3. Cuisinière selon l'une quelconque des revendication précédentes, dans laquelle chacune des parois (7, 8, 9, 10) est formée par une plaque rectangulaire et dans laquelle les parois supérieure et inférieure sont identiques l'une à l'autre et les parois latérales opposées sont identiques l'une à l'autre.

4. Cuisinière selon la revendication 3, dans laquelle chacune des parois (7, 8, 9, 10) est symétrique de part et d'autre de ses deux axes principaux.

5. Cuisinière selon l'une quelconque des revendications précédentes, dans laquelle les faces internes des parois latérales (10) sont formées avec une pluralité de rainures parallèles (12) pour supporter des étagères et/ou des récipients de cuisson.

6. Cuisinière selon l'une quelconque des revendications précédentes, dans laquelle chacune des parois (7, 8, 9, 10) est moulée.

7. Cuisinière selon l'une quelconque des revendications précédentes, dans laquelle les parois (7, 8, 9, 10) du compartiment (6) s'imbriquent le long de leurs bords adjacents et sont en plus maintenues ensemble par de la colle.

8. Cuisinière selon l'une quelconque des revendications précédentes, comprenant en outre un bâti (2) et une porte montée sur charnières (3) supportée sur le bâti pour fermer la face ouverte du compartiment (6) en face de la paroi arrière (7) et un élément de chauffage électrique (11) monté en dessous du compartiment du four.

9. Cuisinière selon la revendication 8, dans laquelle deux compartiments de four (6) sont montés l'un au-dessus de l'autre, deux compartiments de réchauffement sont montés l'un au-dessus de l'autre à côté des compartiments de four, et des moyens de cuisson alimentés séparément (4, 5) sont montés au-dessus de la cuisinière.
